# EUROPÄISCHE PATENTSCHRIFT

(11) **EP 0 650 686 B1**
(45) Veröffentlichungstag und Bekanntmachung des Hinweises auf die Patenterteilung: **02.05.1997**
(21) Anmeldenummer: 93117384.3
(22) Anmeldetag: 27.10.1993
(51) Int. Cl.: A47J 47/12, A47J 47/00

(54) **Brotkasten**
Bread box
Boîte à pain

(43) Veröffentlichungstag der Anmeldung: 03.05.1995
(73) Patentinhaber: LEIFHEIT Aktiengesellschaft, D-56377 Nassau (DE)
(72) Erfinder: Schülein, Rolf Günter, D-56379 Singhofen (DE); Deimel, Helmut, D-56355 Nastätten (DE)

(56) Entgegenhaltungen:
- DE-C- 182 875
- DE-C- 486 720
- GB-A- 207 213
- GB-A- 618 381
- US-A- 1 593 154
- US-A- 1 833 486

## Beschreibung

Die Erfindung betrifft einen Brotkasten entsprechend dem Oberbegriff des Anspruchs 1.

Ein derartiger Brotkasten ist aus der GB-A-207 213 bekannt. Dieser weist insbesondere im täglichen Gebrauch erhebliche Mängel auf. Dabei ist das Hauptproblem das Entfernen der lästigen Krümel. Dies gilt sowohl für den Innenraum als auch für die Arbeitsfläche. Die Krümel fallen dabei zwar in eine kastenförmige Aufnahme unter der Arbeitsfläche, können von da aber nur durch Abnahme der gesamten Arbeitsplatte entfernt werden. Dazu muß der Aufnahmebehälter aus dieser Arbeitsplatte herausgezogen werden. Weiter ist nachteilig, daß die Krümel aus dem Innenraum beim Entsorgen in den Spalt zwischen Innenraum und Schließklappe fallen.

Aufgabe der Erfindung ist es, die Brauchbarkeit eines derartigen Brotkastens zu erhöhen und eine einfache Aufnahme und Entsorgung der Krümel zu ermöglichen.

Zu diesem Zweck ist erfindungsgemäß die Klappe um eine etwa in der Ebene des Bodens verlaufende waagerechte Achse nach unten schwenkbar, als Schneidbrett ausgebildet, das vorzugsweise aus Holz besteht und im heruntergeschwenkten Zustand, in dem es den Zugriff zu dem Inneren des Brotkastens freigibt, in der Gebrauchslage ist, so daß auf ihm Lebensmittel geschnitten werden können. Das Schneidbrett bildet im heruntergeschwenkten Zustand im wesentlichen eine in der Ebene des Bodens liegende Fläche, wobei, um die beim Schneiden von Brot, Kuchen und dergl. anfallenden Krümel auf einfache Weise beseitigen zu können, zwischen dem Boden und der Klappe entlang der Längskante der Klappe eine abnehmbare Krümelsammelrinne vorgesehen ist. Sowohl die auf dem Schneidbrett befindlichen Krümel als auch die auf dem Boden im Innern werden in diese Rinne gekehrt, worauf die Rinne abgenommen und ausgeleert wird. Vorzugsweise ist die Krümelsammelrinne auf die Vorderkante des Bodens aufgesteckt, so daß sie nach vorne zu abgezogen werden kann. Auf dem Schneidbrett befindliche Krümel fallen beim Schließen der Klappe automatisch in die Rinne. Um das Ausleeren zu erleichtern, ist die Rinne vorzugsweise an beiden Enden offen und ihr seitlicher Abschluß wird im eingesteckten Zustand von den Seitenwänden des Brotkastens gebildet.

Ein Ausführungsbeispiel der Erfindung wird im folgenden unter Bezugnahme auf die Zeichnungen beschrieben. Es zeigt:
Fig. 1 eine perspektivische Darstellung eines Brotkastens, und
Fig. 2 einen vergrößerten Schnitt entlang Linie 2-2 in Fig. 1.

Der Brotkasten besteht aus einem Boden 1, Seitenwänden 2 und 3, einer gekrümmten, die Rückwand und die obere Wand bildenden Wand 4 und einer die Vorderwand bildenden Klappe 5, die um eine waagrechte, in der Ebene des Bodens 1 liegende Achse 6 schwenkbar in den Seitenwänden 2 und 3 gelagert ist. Die Klappe 5 ist als Schneidbrett ausgebildet und sie weist an ihrer Außenseite einen waagrecht verlaufendnen, bügelförmigen Griff 7 auf.

Um die beim Schneiden von Brot, Kuchen und dergl. auf dem Schneidbrett anfallenden Krümel auf einfache Weise beseitigen zu können, ist eine Krümelsammelrinne 8 vorgesehen, die im Ausführungsbeispiel auf die Vorderkante 9 des Bodens 1 aufgesteckt ist und nach vorn abgezogen und dann entleert werden kann. Zur Erleichterung der Entleerung ist die Rinne 8 an beiden Enden offen und ihre Enden sind bei eingeschobene Rinne von entsprechend gefornmten Ansätzen 10 der Seitenteile 2,3 abgeschlossen.

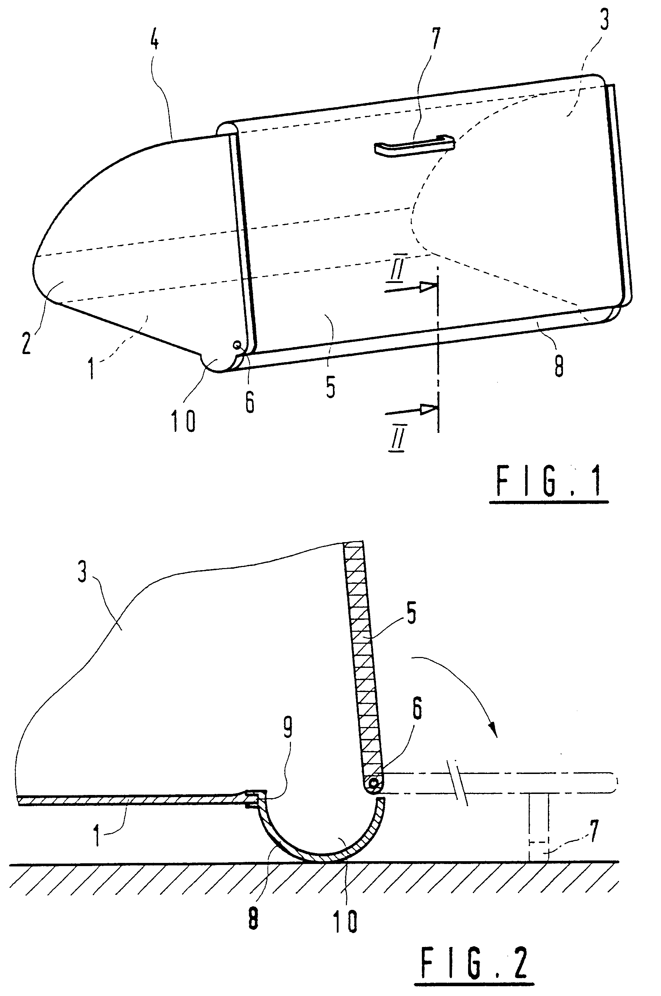

Der Griff 7 dient, wie in Fig. 2 strichpunktiert angedeutet, als Stütze für die heruntergeschwenkte Klappe 5, so daß diese im wesentlichen waagrecht liegt. Aus Fig. 2 ist auch deutlich zu sehen, daß die Rinne 8 mit ihrer Vorderkante unter der rückwärtigen Kante der herabgeschwenkten Klappe 5 zu liegen kommt, so daß alle auf der Schneidfläche liegenden Krümel sicher in die Rinne 5 gewischt werden können.

## Patentansprüche

1. Brotkasten mit einem Boden (1), Seitenwänden (2,3), einer eine vordere Öffnung abschließende Klappe (5) mit Arbeitsfläche und einer Aufnahme für Krümel, dadurch gekennzeichnet, daß die Klappe (5) um eine etwa in der Ebene des Bodens (1) verfaufende waagerechte Achse (6) nach unten schwenkbar und als Schneidbrett ausgebildet ist, und daß eine Krümelsammelrinne (8), die mit ihrer Vorderkante unterhalb der rückwärtigen Kante der Klappe (5) liegt, lösbar auf die Vorderkante (9) des Bodens (1) aufgesteckt ist.

2. Brotkasten nach Anspruch 1, dadurch gekennzeichnet, daß die Krümelsammelrinne (8) an ihren Enden offen ist und diese bei aufgesteckter Krümelsammelrinne (8) von den Seitenwänden (2,3) abgeschlossen sind.

## Claims

1. Bread bin, having a base (1), side walls (2, 3), a flap (5) with a work surface closing off a front opening, and a receptacle for crumbs, characterized in that the flap (5) can be pivoted downwards about a horizontal pin (6) running approximately in the plane of the base (1) and is designed as a cutting board, and in that a crumb collection groove (8), the front edge of which is situated beneath the rear edge of the flap (5), is attached detachably to the front edge (9) of the base (1).

2. Bread bin according to Claim 1, characterized in that the crumb collection groove (8) is open at its ends, which are closed off by the side walls (2, 3) when the crumb collection groove (8) is attached.

## Revendications

1. Boîte à pain comprenant un fond (1) ; des parois latérales (2, 3) ; un volet (5) obturant une ouverture antérieure et muni d'une surface de travail ; et un réceptacle à miettes, caractérisée par le fait que le volet (5) peut pivoter vers le bas autour d'un axe horizontal (6) s'étendant à peu près dans le plan du fond (1), et est réalisé sous la forme d'une planchette à découper ; et par le fait qu'une gouttière (8) collectrice de miettes, dont le bord antérieur se trouve au-dessous du bord postérieur du volet (5), est emboîtée amoviblement sur le bord antérieur (9) du fond (1).

2. Boîte à pain selon la revendication 1, caractérisée par le fait que la gouttière (8) collectrice de miettes est ouverte à ses extrémités, lesquelles sont obturées par les parois latérales (2, 3) à l'état emboîté de ladite gouttière (8) collectrice de miettes.
